# EUROPEAN PATENT APPLICATION

(11) **EP 4 650 117 A1**
(43) Date of publication of application: **19.11.2025**
(21) Application number: 24175327.6
(22) Date of filing: 13.05.2024
(51) Int. Cl.: B25J 9/16, G05B 19/402

(54) **CALIBRATION DEVICE AND METHOD FOR ROBOTIC ARM WITH OPTICAL SYSTEM**

(71) Applicant: Aernnova Aerospace, 01510 Miñano (ES)
(72) Inventor: Goiriena Garetxana, Oier, 48300 Gernika (ES)
(74) Representative: Clarke, Modet y Cía., S.L.

(57) **Abstract**

A calibration device and method for a robotic arm equipped with artificial vision. The calibration device comprises a plate, a location item in the plate, and six distance sensors. The calibration process uses the calibration device to directly relate the image of the location item seen by the optical system of the robot to the position of the tool at the end of the robotic arm.

## Description

### TECHNICAL FIELD OF THE INVENTION

The present invention is included in the field of manipulator machines with optical recognition systems (artificial vision systems), in particular that of robotic arms used in industry for manufacturing operations such as drilling, welding, machining or other.

### BACKGROUND OF THE INVENTION

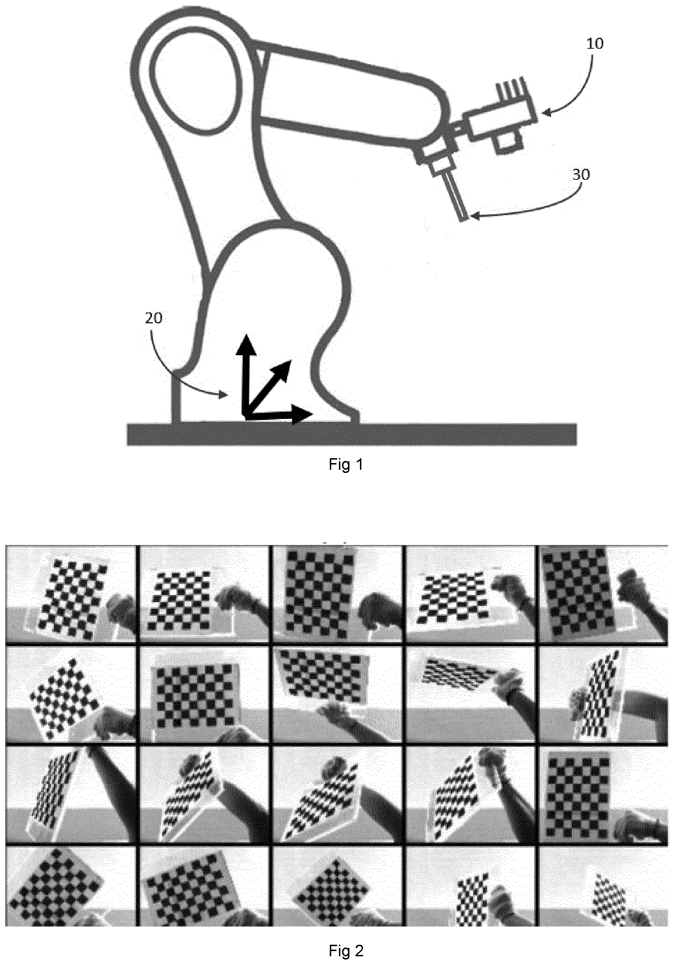

In industry, robotic arms are frequently used for manufacturing or assembly tasks. Different solutions exist for the robot to know where its target is located and where it has to move its arm to perform the required operations. Among those location systems, one of them is the use of optical systems, usually comprising three-dimensional stereo cameras located on the robotic arm (FIG 1). Those cameras, after a programming process, are able to identify specific visual references (location items) located on the surface of the target part (manufacturing element), and by identifying the perspective of the image received from those location items the arm is able to know its three-dimensional location in relation to the manufacturing element.

In those optical systems, usually the position of the camera (10) on the robotic arm is previously calibrated (to compensate for thermal oscillations in the place where the robot is located, for example, which could affect the position of the camera with respect to the robot reference system) by using a standard calibration jig for optical systems, usually a flat template with a specific grid printed on it; by taking views of the template from different positions (FIG 2), the robotic arm is able to locate the camera position in relation with the robot reference axis (20), which usually has its origin near the robot base (FIG 1).

In robotic arms that include a manufacturing tool (30) at their end (usually, a removable tool, such as a drill, a milling cutter or whatever other), in addition to the calibration of the camera position in relation to the robot reference system (20), it is also necessary to calibrate the exact position of the tool with respect to the robot reference system. This is to take into account small deviations in the tool size or position with relation to the tool holder, or the dimensional effect of room temperatures on the length of the robotic arm, for example.

The calibration of the tool position may be done by different methods, as documented in patents EP4230358, US2015158180 and other. One of them is, for example, to use a small frame equipped with a laser beam crossing the frame, with a photoelectric sensor located opposite to the laser emitter that is able to determine when the laser beam is blocked. The robot moves the arm trying to intercept the laser beam with the tool located at its end, and repeats the process with different positions of the arm and different inclinations of the tool. This way, the robot software determines the exact location of the tool, and in particular the TCP (Tool Center Point) in relation to the robot reference system by detecting when the tool intercepts the laser beam for every arm position.

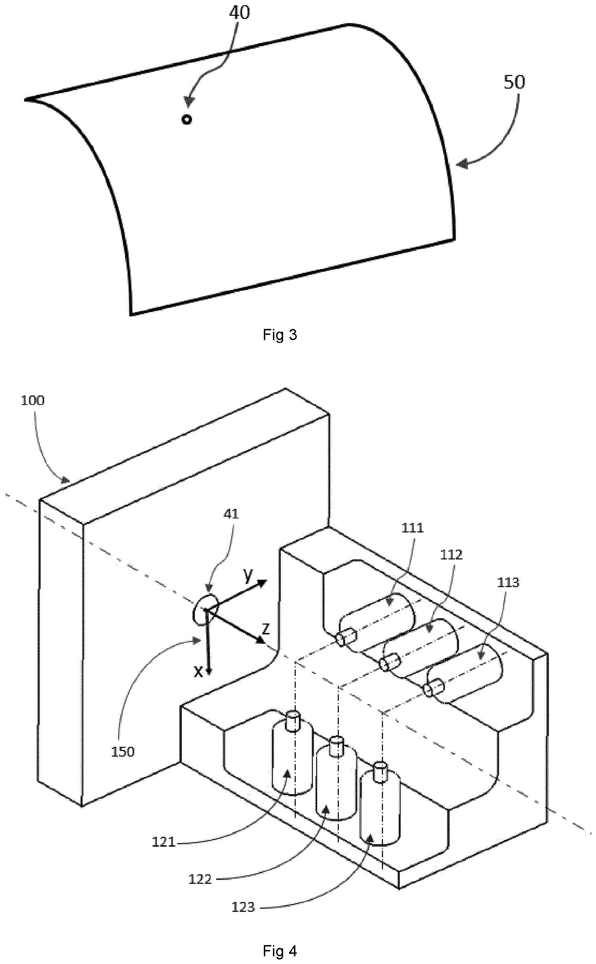

Once both the camera (10) and the tool (30) are calibrated with reference to the robot reference system (20), it is time to make the camera recognize the location item (40) used as reference on the manufacturing element (50) (FIG 3). This location item may be, for example, a hole of a given diameter, or a group of them, or any other element easy to distinguish from the background by the camera (a pin, a fastener, a printed image, etc). By identifying the point of view from which this location item (40) is seen by the camera (10), the software of the robot can identify its position with relation to the location item (40) on the manufacturing element (50). This way, the robot is able to know where the manufacturing operations on the manufacturing element are to be performed.

As it has been described, it is evident that in the usual state of the art all the positions are related to the robot reference system (20): the camera (10) locates its target visually and references it to the robot reference system (20) (by knowing, through previous calibration, the position of the camera with respect to that reference system). The robot, then, positions the tool (30) in the place required by knowing the position of the tool tip (TCP) with respect to the same robot reference system (20), also thanks to the previous calibration.

However, this system has an evident drawback: there is no direct relationship between the camera position and the tool position, since both of them are referenced to a third element, the robot reference system. This way, the small errors occurred during the calibration of both the camera and the tool are accumulated when positioning the tool using the view received by the camera. This is a problem for those operations where high precision is a must.

The precision of the location of the tool of the robotic arm when performing the required manufacturing operations may be significantly improved by implementing some system that relates directly the vision of the camera (10) to the position of the tool (30). This is the purpose of the present invention.

### BRIEF DESCRIPTION OF DRAWINGS

Present specification is complemented with a set of drawings, illustrative of the preferred example and never limiting the invention.
Fig 1 shows a robotic arm equipped with a three-dimensional stereo camera and with a tool installed at the end of the arm, with the robot reference system located near the robot base.
Fig 2 shows the typical process of taking images of a given template from various perspectives to calibrate the camera position in relation to the robotic arm.
Fig 3 schematically shows a manufacturing element with a location item on it.
Fig 4 shows the calibration device including a plate with a replica of the location item, and six contact sensors in two groups of three sensors each.
Fig 5 shows the calibration device with a calibrated rod installed on it.
Fig 6 shows the calibration device equipped with a photoelectric laser sensor to determine the distance of the tool to the plate.

### DESCRIPTION OF THE INVENTION

The present invention consists in a calibration device and method to establish a direct relationship between the position of a tool at the end of a robotic arm and the image received by the stereo camera located on the robotic arm as part of the optical reference system of the robot.

The calibration device (FIG 4) comprises a plate (100) that includes a replica of the location item (41) of the manufacturing element (50). For clarity, in the following description we will suppose that this location item is a hole of a given diameter and depth, although other alternative references could be used (such as a pin, a fastener, a drawn shape, or many other).

In addition to the plate with the location item replica, six high precision distance sensors (111, 112, 113, 121, 122, 123) are included in two groups of three, each one of these groups located on a plane perpendicular to the plate (100), and each one of these planes also perpendicular one to another, forming the planes and the plate an orthogonal trihedron (150), the origin of the trihedron located in the center of the hole in the plate (100). For clarity, we will define a local reference system (150) with its origin on the center of the hole on the plate, its axes x and y located on the plane of the plate, and the axis z perpendicular to the plate (FIG 4).

Referenced to this axis system (150), three of the sensors (121, 122, 123) are located on the plane xz and aligned with the axis x (measuring distances in that direction). And the other three sensors (111, 112, 113) are located on the plane yz and aligned with the axis y (measuring distances in that direction). The three sensors on each one of these groups are pointed to a line parallel to the axis z. (FIG 4) The distance between the sensors is related to the length of the typical tool to be used by the robot, being the distance between the first and the last sensor in each group somewhat smaller than the length of the tool; this allows the three sensors to measure distances to the typical tool at a time, along its length.

The purpose of the distance sensors installed on this calibration device is to calibrate the image received by the stereo camera (10) when the tool (30) is located perpendicular to the plate (100) and pointed to the center of the hole in the plate (the location item replica 41). The sensors detect deviations along their longitudinal axis.

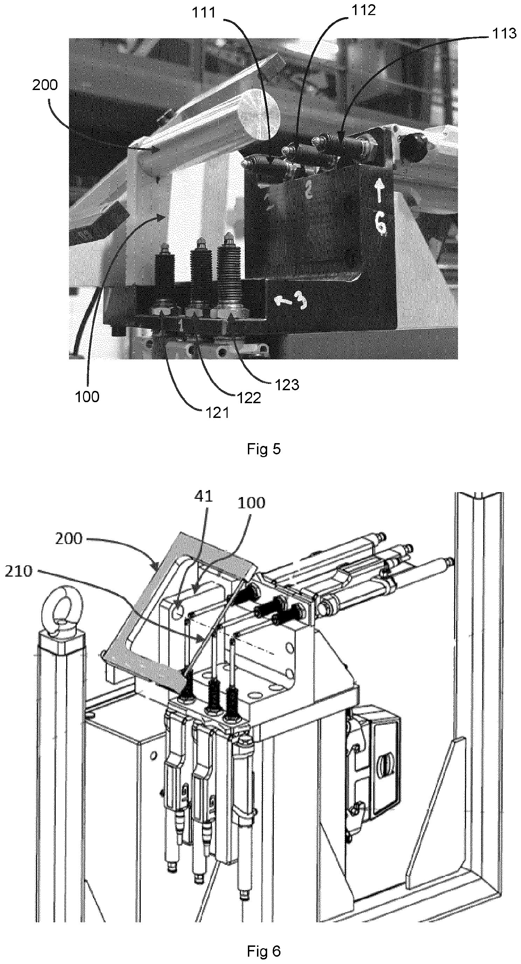

The process starts by calibrating the distance sensors. In this first step, a calibrated reference item (200) is positioned on the location item (41) of the plate (100) of the calibration device (FIG 5). The calibrated reference item (200) represents a perfectly positioned tool (30), aligned with the location item and perpendicular to the plate. For simplicity, in the next description we will assume that the tool (30) is substantially cylindrical (for example, a drilling or a milling tool) and that the location item (41) is a hole; in that case, the calibrated reference item (200) would be a rod introduced in the hole of the plate.

The six distance sensors then measure the distance of each one of them to the surface of the rod. This gives the reference position ("zero") for the distance sensors. In the case that the location element is not a hole, the calibrated rod (200) will be positioned on it through any other positioning system (for example, if the location device is a pin, the rod will include a hole to be positioned on the pin, etc).

In a second step, the rod (200) is removed from the calibration device and the real tool (30) installed in the robotic arm is approximated to a pre-defined short distance of the hole (41) in the plate (100), in what is expected to be its right starting position (aligned with the hole and perpendicular to the plate, at a given distance of the plate). The distance of the tool to the plate has to be carefully measured because this will be the reference position of the tool at the start of the real manufacturing process, where the vision taken by the camera of the location item (41) will move the tool once the calibration process is finished. Sensors of several different types may be added to the calibration device to determine that the tool center point (TCP) is at the defined distance from the plate (100) at this point. The distance of the TCP to the plate at this step will be greater than the distance to the plate of the two distance sensors nearest to it (111, 121), and equal or less than the distance to the plate of the two next distance sensor in each group (112, 122).

The four distance sensors furthest from the plate (the two furthest on each row, 112, 113, 122 and 123) are then used to measure their distance to the tool, comparing these measurements with the ones taken with the calibrated reference item (rod) used in the previous calibration step. These measurements give the error in position of the tool, both in displacement from the hole center and perpendicularity to the plate.

Next, the robot calibration software (whatever existing software available for this purpose, not forming part of this invention) compares the reference measurements taken from the rod with the new ones taken from the tool and calculates the corrections to be done, trying to move the robot arm in such a way to minimize these errors. The four contact sensors (112, 113, 122, 123) are then used again to measure their distance to the tool (30), repeating the process and measuring the new errors in tool positioning. The errors are then transferred again to the robot software and the tool is again moved to try to counteract those errors. This iterative process is repeated until finally the sensors give an error below a previously established tolerance. The robot stores the position of the arm and the tool at its end as the right position with reference to the calibration device.

It is time now to calibrate the camera installed on the robotic arm with respect to the tool.

With the tool perfectly positioned in relation to the calibration device once finished the calibration process related above, it is time for the camera (10) to take a picture of the calibration tool, in particular a high precision picture of the location item replica (the hole in this example) in the plate (100). Since the camera is installed on the robot arm, not directly aligned with the tool (30) (which is positioned along the hole axis), the hole will be viewed by the camera as an ellipse. The eccentricity and orientation of the ellipse seen by the camera are used by the robot software to identify the spatial orientation of the hole; being a stereo camera, it can also measure distances using parallax data from the two images taken by both camera lenses. This way, the robot software is able to identify the reference trihedron (150) and the camera position in relation to it in Euler coordinates (x, y, z coordinates for translation and a, b, c for rotation): the next time the camera sees a hole and the image of that hole seen by the stereo camera is equivalent to the one taken now during the calibration process, the robot will know that the tool is positioned exactly where it has to be in relation to the hole, centered with the hole, perpendicular to the plate and at the required distance of it. The size of this new hole may be different from the one used for the calibration: as long as the Euler coordinates of the trihedron located on the center of the new hole are the same as those of the one used for the calibration, the robot will know that the tool is in the right position.

Although we are using a hole as an example in this description, virtually any distinctive feature can be used as a visual reference (location item).

In this process, the alignment of the tool with the hole and its perpendicularity to the plate are assured at a given distance of the plate, but it has to be also assured that the movement of the robotic arm when approximating the tool to the hole follows the hole axis, to guarantee that the TCP is still positioned exactly where it has to be once the robotic arm has approached the tool to the manufacturing element. This is what the remaining two contact sensors (the one of each row nearest to the plate, 111 and 121) are for.

In a next step of the process, the robot moves the tool approaching its tip (TCP) to the plate while maintaining it aligned with the hole, and then stops, when reaching a given distance of the plate, equal or less than the distance to the plate of the two distance sensors nearest to it (111, 121). These sensors (111, 121) are used now to measure their distance to the tool, confirming that its alignment with respect to the plate and the hole is maintained. If any deviation is found, the errors measured are transferred to the robot software, which deduces the error committed during the tool approximation to the plate and calculates the right trajectory of the tool along the hole axis.

The calibration process is now finished. When working on a real part (manufacturing element 50), the part will include a location item (40) equivalent to that of the calibration device, acting as a reference for the robot for positioning the tool with respect to the real part.

As it has been described, this calibration process establishes a direct relationship between the position of the tool and the camera installed on the robotic arm, instead of referring each one of them to the robot reference system. This way, the precision of the tool positioning is significantly improved with respect to the usual process.

### DESCRIPTION OF PARTICULAR EMBODIMENTS OF THE INVENTION

The invention described in previous paragraphs may be implemented with multiple variations.

As already mentioned before, the location item (40) may be of many different types: a hole, a pin, a fastener, a drawn image on the surface of the part, etc. Thus, the replica of this location item in the calibration device may also be of many different types, coincident with the one used for reference in the manufacturing element (50).

Many different embodiments of the invention may also be implemented by using different types of distance sensors (111, 112, 113, 121, 122, 123). These may be contact sensors (for example, including a telescopic probe that extends from the sensor until touching the body whose distance is to be measured), or non-contact sensors of many different types: inductive sensors, capacitive sensors, laser sensors, etc.

Alternative embodiments of the invention may exist that differ from the previous general description in that the six distance sensors are not located in two planes perpendicular one to another, forming an orthogonal trihedron with the plate (100). Although this is the preferred embodiment, in other embodiments the two groups of sensors could be, for example, located in planes forming an angle of, say, 60° or 120° one to another, and forming with the plate (100) a non-orthogonal trihedron.

In other embodiments of the invention, the calibration device includes at least one additional sensor to determine the distance of the tool (30) to the plate (100) in the second step of the calibration process, when the tool is approximated to a given distance of the plate and the four sensors furthest from the plate are then approximated to the tool to measure the deviations from the center axis of the location item (41). This sensor may be of many different types.

In a particular embodiment of the invention (FIG 6), this sensor is a photoelectric sensor (200) equipped with a laser able to detect when some object interrupts the laser beam (210). The sensor is located in such a way that the laser beam crosses a line passing through the center of the location item replica (41) and perpendicular to the plate (100) at the distance of the plate where the tool has to be located to start the calibration process. This way, the tool is approximated by the robotic arm to the plate until the exact point where the tool interrupts the laser beam, indicating this is the exact distance from the plate where the robotic arm has to stop and the calibration process has to start.

## Claims

1. A calibration device for a robotic arm equipped with artificial vision comprising
• a plate (100) comprising at least one relevant feature identifiable as a visual reference (location item, 41) on the plate surface, and
• a group of at least four distance sensors disposed to measure distances to an object positioned in the vicinity of the plate and substantially in the normal to the plate through the location item.

2. The calibration device according to claim 1 where the group of distance sensors is of at least six sensors.

3. The calibration device according to claim 2 where the six distance sensors are arranged in two groups of three and with capacity to measure distances along their axis, each one of these groups located on a plane substantially perpendicular to the plate (100), forming the planes of the sensors and the plate (100) a trihedron (150), the origin of the trihedron located in the center of the location item (41) in the plate (100), the axis z of the trihedron perpendicular to the plate and the axes x and y located on the plane of the plate; the first group of sensors located on the plane xz and measuring distances in the x axis direction, the other three sensors (111, 112, 113) located on the plane yz and measuring distances in the y axis direction, the three sensors on each one of these groups pointing to a line parallel to the axis z.

4. The calibration device according to the claim 3 where the planes containing the two groups of sensors are substantially perpendicular one to another, being the trihedron (150) formed by the planes of the sensors and the plate (100) an orthogonal trihedron.

5. The calibration device according to any of the claims 1 to 4 where the visual reference on the plate is a circular hole.

6. The calibration device according to any of the claims 1 to 4 where the visual reference on the plate is a protruding cylindrical pin.

7. The calibration device according to any of the claims 1 to 6 further comprising a sensor able to detect the presence of a body at a given distance of the plate (100) in the vicinity of the normal to the plate passing through the location item (41).

8. A calibration process for a robotic arm equipped with an optical recognition system using the calibration device according to any of the claims 1 to 7, comprising the following steps:
• Placing a calibrated reference item (200) on the location item (41) of the plate (100) of the calibration device,
• using at least four distance sensors (112, 113, 122, 123) of the calibration device to measure their distance to the calibrated reference item,
• removing the calibrated reference item from the calibration device and approaching the real tool (30) installed in the robotic arm to a given distance of the plate (100) of the calibration device, in a position perpendicular to the plate and aligned with the location item in the plate,
• using the four distance sensors furthest from the plate (112, 113, 122, 123) to measure their distance to the tool (30),
• comparing the distances measured for the calibrated reference item (200) with the ones measured for the tool (30) and calculating the corrections needed in the position of the robotic arm to minimize the differences between both groups of measurements, and
• using the optical system (10) of the robotic arm to take a picture of the location item on the calibration device to use it as a reference for the positioning of the tool.

9. A calibration process for a robotic arm equipped with an optical recognition system using the calibration device according to any of the claims 2 to 7, comprising the following steps:
• Placing a calibrated reference item (200) on the location item (41) of the plate (100) of the calibration device,
• using six distance sensors (111, 112, 113, 121, 122, 123) of the calibration device to measure their distance to the calibrated reference item,
• removing the calibrated reference item from the calibration device and approaching the real tool (30) installed in the robotic arm to a given distance of the plate (100) of the calibration device, in a position perpendicular to the plate and aligned with the location item in the plate,
• using the four distance sensors furthest from the plate (112, 113, 122, 123) to measure their distance to the tool (30),
• comparing the distances measured for the calibrated reference item (200) with the ones measured for the tool (30) and calculating the corrections needed in the position of the robotic arm to minimize the differences between both groups of measurements,
• using the optical system (10) of the robotic arm to take a picture of the location item on the calibration device to use it as a reference for the positioning of the tool,
• approaching the tool (30) tip to a short distance of the plate (100) of the calibration device and using the two distance sensors of the calibration device nearest to the plate (111, 121) to measure their distance to the tool, and
• comparing the distances measured for the calibrated reference item (200) with the ones measured for the tool (30) and calculating the corrections needed in the movement of the robotic arm between the previous position and the new one to minimize the differences between both groups of measurements.

## Amended claims

### Amended claims in accordance with Rule 137(2) EPC.

1. A calibration device for a robotic arm equipped with optical recognition system comprising:
• a plate (100) comprising at least one location item (41) identifiable as a visual reference on the plate surface, and
• a stereo camera (10) located on the robotic arm, the stereo camera (10) configured to take a picture of the location item (41);
• a group of at least six distance sensors (111,112,113,121,122,123) disposed to measure distances in the vicinity of the plate (100) and substantially in the normal to the plate (100) passing through the location item (41), **characterized in that**:
the six distance sensors are arranged in two groups of three and with capacity to measure distances along their axis, each one of these groups located on a respective plane substantially perpendicular to the plate (100), forming the planes of the two groups of sensors and the plate (100) a trihedron (150), the origin of the trihedron comprised in the location item (41) in the plate (100), the axis z of the trihedron perpendicular to the plate and the axes x and y located on the plane of the plate (100); the first group of sensors (121,122,123) located on the plane xz and measuring distances in the x axis direction, the other three sensors (111, 112, 113) located on the plane yz and measuring distances in the y axis direction, the three sensors on each one of these groups pointing to a line parallel to the axis z.

2. The calibration device according to the claim 1 where the planes containing the two groups of sensors are substantially perpendicular one to another, being the trihedron (150) formed by the planes of the sensors and the plate (100) an orthogonal trihedron.

3. The calibration device according to any of the claims 1 to 2 where the visual reference on the plate is a circular hole.

4. The calibration device according to any of the claims 1 to 3 where the visual reference on the plate is a protruding cylindrical pin.

5. The calibration device according to any of the claims 1 to 4 further comprising a sensor able to detect the presence of a body at a given distance of the plate (100) in the vicinity of the normal to the plate passing through the location item (41).

6. A calibration process for a robotic arm equipped with an optical recognition system using the calibration device according to any of the claims 1 to 5, comprising the following steps:
• placing a calibrated reference item (200) on the location item (41) of the plate (100) of the calibration device,
• using at least four distance sensors (112, 113, 122, 123) of the calibration device to measure their distance to the calibrated reference item,
• removing the calibrated reference item from the calibration device and approaching a tool (30) installed in the robotic arm to a given distance of the plate (100) of the calibration device, in a position perpendicular to the plate and aligned with the location item (41) in the plate (100),
• using the four distance sensors (112, 113, 122, 123) furthest from the plate (100) to measure their distance to the tool (30),
• comparing the distances measured for the calibrated reference item (200) with the ones measured for the tool (30) and calculating the corrections needed in the position of the robotic arm to minimize the differences between both groups of measurements, and
• using a stereo camera in the optical system (10) of the robotic arm to take a picture of the location item on the calibration device to use it as a reference for the positioning of the tool.

7. A calibration process according to claim 6, wherein six distance sensors (111, 112, 113, 121, 122, 123) are used and it further comprises the following steps:
• approaching the tool (30) tip to a short distance of the plate (100) of the calibration device and using the two distance sensors of the calibration device nearest to the plate (111, 121) to measure their distance to the tool, and
• comparing the distances measured for the calibrated reference item (200) with the ones measured for the tool (30) and calculating the corrections needed in the movement of the robotic arm between the previous position and the new one to minimize the differences between both groups of measurements.
